# EUROPÄISCHE PATENTSCHRIFT

(11) **EP 2 192 288 B1**
(45) Veröffentlichungstag und Bekanntmachung des Hinweises auf die Patenterteilung: **17.05.2017**
(21) Anmeldenummer: 09176008.2
(22) Anmeldetag: 13.11.2009
(51) Int. Cl.: F02B 29/04, F28F 9/02

(54) **Auflademodul, Aufladesystem und Brennkraftmaschine**
Charge module, charge system and combustion engine
Module de charge, système de chargement et moteur à combustion interne

(30) Priorität: 28.11.2008 DE 102008059451
(43) Veröffentlichungstag der Anmeldung: 02.06.2010
(73) Patentinhaber: MAHLE Behr GmbH & Co. KG, 70469 Stuttgart (DE)
(72) Erfinder: Pantow, Eberhard, 71364 Winnenden (DE); Haßdenteufel, Klaus, 70839 Gerlingen (DE); Diem, Johannes, 71287 Weissach (DE)
(74) Vertreter: Grauel, Andreas

(56) Entgegenhaltungen:
- EP-A2- 1 296 108
- DE-A1- 19 902 504
- DE-A1-102007 044 980

## Beschreibung

Die Erfindung betrifft ein Auflademodul für ein Aufladesystem einer Brennkraftmaschine, aufweisend ein Saugrohr für ein Ladefluid und einen im Saugrohr integrierten Wärmetauscher zum Wärmetausch zwischen Auflademodul für ein Aufladesystem einer Brennkraftmaschine, aufweisend ein Saugrohr für ein Ladefluid, insbesondere ein Gas wie Abgas und/oder Ladeluft od. dgl. Gasgemische, und einen im Saugrohr integrierten Wärmetauscher zum Wärmetausch zwischen dem Ladefluid und einem Kühlfluid, wobei der Wärmetauscher einen Block zur voneinander getrennten und wärmetauschenden Führung des Ladefluids und des Kühlfluids aufweist und eine Kühlfluid-Zuführung. Die Erfindung betrifft weiter ein Aufladesystem für eine Brennkraftmaschine mit einem Auflademodul der genannten Art sowie ein Brennkraftsystem mit einem Aufladesystem der genannten Art und einer Brennkraftmaschine.

Die DE 199 02 504 A1 offenbart ein Ansaugmodul mit einem Ladeluftkühler.

Für Brennkraftmaschinen wie z.B. einem Otto-Motor oder einem DieselMotor od.dgl. ist häufig ein Aufladesystem vorgesehen, mit dem ein Ladefluid - beispielsweise ein Abgas, eine Ladeluft oder ein Abgas-Ladeluftgemisch - der Brennkraftmaschine in komprimierter Form im Betrieb zugeführt wird. Dies führt nicht nur zu einer Leistungssteigerung, sondern auch zur Senkung des Kraftstoffverbrauchs und zur Senkung einer Schadstoffemission der Brennkraftmaschine. Um solche und andere Betriebsparameter der Brennkraftmaschine zu optimieren, ist es regelmäßig erforderlich, das durch die Verdichtung im Aufladesystem erhitzte Ladefluid unter möglichst geringem Druckverlust zu kühlen.

Dazu hat es sich bei fortschrittlichen Aufladesystemen durchgesetzt, einen Wärmetauscher, wie einen Abgas- und/oder Ladeluftkühler od.dgl., bei einem Auflademodul des Aufladesystems der eingangs genannten Art im Saugrohr zu integrieren. Als problematisch hat sich dabei erwiesen, den Wärmetauscher einerseits herstellungsgünstig zu integrieren und andererseits für den Betrieb des Auflademoduls eine sichere Lagerung des Wärmetauschers im Saugrohr zu gewährleisten.

Dazu ist es bekannt, einen Wärmetauscher an einer Innenseite des Saugrohres, beispielsweise über eine Halteplatte, einseitig fest anzuflanschen. Dazu ist es regelmäßig notwendig, zum einen in aufwändiger Weise die Flansch-Halterung durchzuführen und zum anderen vergleichsweise komplizierte Dichtungsmaßnahmen vorzunehmen, um einen leckagefreien Betrieb des flanschgehalterten Wärmetauschers im Saugrohr des Auflademoduls zu gewährleisten.

Wünschenswert wäre es, die vorgenannten Probleme unter vergleichsweise günstigen Herstellungsbedingungen und vergleichsweise einfachen Maßnahmen zu beseitigen.

An dieser Stelle setzt die Erfindung an, deren Aufgabe es ist, ein Auflademodul, ein Aufladesystem und eine Brennkraftmaschine anzugeben, bei welcher ein Wärmetauscher vergleichsweise einfach und kostengünstig und dennoch betriebssicher im Saugrohr des Auflademoduls integriert werden kann. Insbesondere sollte zum einen ein Wärmetauscher auch bei betriebsbedingten Verformungen des Saugrohres mechanisch sicher, d.h. insbesondere ortsfest, gehalten sein und zum anderen sollte gewährleistet sein, dass das Ladefluid vollständig dem Wärmetauscher zugeführt wird, d.h. es sollte eine leckagefreie Halterung des Wärmetauschers gegeben sein.

Die Aufgabe wird durch ein Auflademodul gemäß Anspruch 1 gelöst.

Die Erfindung geht von der Überlegung aus, dass die Funktion des Wärmetauschers im Saugrohr im Wesentlichen im Wärmetausch zwischen dem Ladefluid und einem Kühlfluid besteht. Die Wärmetauschfunktion wird über den Block des Wärmetauschers abgewickelt, welcher regelmäßig aus einem anderen Material als die übrigen Teile des Wärmetauschers gefertigt ist. Insbesondere geht die Erfindung auch von der Überlegung aus, dass die übrigen Teile des Wärmetauschers aus einem Material gefertigt sein können, wie es auch für ein Saugrohrgehäuse verwendbar ist. Damit hat die Erfindung erkannt, dass es sich zur Integration eines Wärmetauschers in einem Saugrohr wenigstens die Kühlfluidzuführung als Teil des Saugrohrgehäuses ausbilden lässt. Der Block des Wärmetauschers kann dagegen als separates Teil besonders einfach in dem Saugrohrgehäuse gehalten sein. Gemäß dieser Erkenntnis führt dies zu einer besonders einfachen und die synergetische Materialvoraussetzung für Saugrohrgehäuse und Wärmetauscherteile ausnutzenden Lösung eines Auflademoduls. Insbesondere ergeben sich Fertigungsvorteile durch Material- und Zeiteinsparung, da wenigstens die Kühlfluidzuführung mit dem Saugrohrgehäuse hergestellt werden kann. Beispielsweise kann die Kühlfluidzuführung mit dem Saugrohrgehäuse hergestellt oder an ein vorhandenes Saugrohrgehäuse angespritzt werden - beide Teile bestehen bevorzugt aus Kunststoff. Darüber hinaus lassen sich auch andere Teile des Wärmetauschers, vorzugsweise alle anderen Teile des Wärmetauschers außer dem Block des Wärmetauschers mit dem Saugrohrgehäuse ausbilden. Dies betrifft insbesondere Seitenbleche und/oder Rohrbodenverbindungen oder sonstige Bauteile eines Wärmetauschers.

In einer erfindungsgemäßen Weiterbildung ist die Kühlfluidzuführung ausgebildet durch wenigstens eine im Saugrohrgehäuse innenliegende Trennwand. Dies ist eine besonders einfache und elegante Lösung im Rahmen des Konzepts der Erfindung.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

In einer besonders bevorzugten Weiterbildung ist die im Saugrohrgehäuse innenliegende Trennwand im Anordnungsbereich des Blockes zur Darstellung der Kühlfluidzuführung ausgebildet. Vorteilhaft kann durch die unmittelbare räumlich aneinandergrenzende Anordnung der Trennwand und des Blockes der Wärmetauscher im Saugrohrgehäuse gebildet bzw. durch Verbindung des Blockes mit der Trennwand der Wärmetauscher integral mit dem Saugrohrgehäuse dargestellt werden.

Die Trennwand ist doppelwandig ausgebildet. Bei einer doppelwandig ausgebildeten Trennwand erhöht sich die Dichtungswirkung. Beispielsweise kann bei einer doppelwandig ausgebildeten Trennwand der Zwischenraum mit Dichtungsmaterial ausgefüllt sein. Der Zwischenraum kann aber auch offen sein wenn die übrige Abdichtung der Verbindung zwischen Trennwand und Block ausreichend dargestellt ist.

Insgesamt ist es mit Vorteil vorgesehen, dass die Trennwand zwischen einem Kühlfluideinlass der Kühlfluidzuführung des Saugrohrgehäuses und der Ladefluidführung des Saugrohrgehäuses angeordnet ist - generell kann die Trennwand ggf. auch räumlich beabstandet vom Block sein, insbesondere wenn es sich um eine oder mehrere Trennwände handelt.

Der Block ist in Form eines Wärmetauschernetzes gebildet. Insbesondere hat sich ein Block als vorteilhaft erwiesen, welcher aufweist: eine Anzahl von dem Kühlfluid durchströmbarer Strömungskanäle,
eine die Strömungskanäle aufnehmende, von dem Ladefluid durchströmbare Kammer.

Insbesondere im Rahmen der vorgenannten Weiterbildung hat es sich als vorteilhaft erwiesen, dass die Trennwand Strömungskanäle des Blockes hält. Besonders bevorzugt ist die Trennwand als Rohrboden ausgebildet. Als Rohrboden erfüllt die Trennwand zum einen die Funktion einer Trennung zwischen Ladefluid und Kühlfluid und zum anderen eine ausreichende Halterung der Rohre. Vorteilhaft sind die Strömungskanäle als Flachrohre ausgebildet. Diese lassen sich besonders vorteilhaft und kostengünstig herstellen.

Weitere Weiterbildungen im Rahmen des Konzepts der Erfindung ermöglichen eine besonders einfache Zusammensetzung des Auflademoduls. Insbesondere hat es sich als vorteilhaft erwiesen, dass die Trennwand eine Öffnung zur Aufnahme eines Strömungskanals aufweist. Die Öffnung ist vorteilhaft als eine Schlitzöffnung beispielsweise zur Aufnahme eines Flachrohres ausgebildet. Insbesondere erweist sich eine einseitig offene Schlitzöffnung als vorteilhaft, d.h. eine Berandung der Öffnung ist an einer Öffnungsseite nicht geschlossen. Im letzteren Fall kann ein Strömungskanal vorteilhaft von der Öffnungsseite eingeschoben werden. Generell hat es sich als vorteilhaft erwiesen, dass die Öffnung derart ausgebildet ist, dass ein Rohr einschiebbar ist, insbesondere von der Öffnungsseite seitlich einschiebbar ist.

Darüber hinaus ist es vorteilhaft, dass ein Saugrohrgehäuse mit einem ersten Teil und einem zweiten Teil versehen ist. Es hat sich gezeigt, dass im Rahmen einer besonders bevorzugten Weiterbildung der Block des Wärmetauschers nur an einem Teil des Saugrohrgehäuses gehalten werden kann. Der genannte eine Teil ist insbesondere ein der Brennkraftmaschine nächster Teil. Dies hat erhebliche Fertigungsvorteile, da nach Anbringung des der Brennkraftmaschine nächsten Teils des Saugrohrgehäuses der Block, insbesondere die Strömungskanäle des Blockes, in die Trennwand eingeschoben werden können. Danach lässt sich der Einschubbereich in besonders vorteilhafter Weise abdichten und schließen.

In diesem Zusammenhang hat es sich als vorteilhaft erwiesen, dass eine einseitig offene Schlitzöffnung bzw. generell eine Öffnung bei Aufnahme eines Strömungskanals, etwa auf Höhe einer Fügenaht angeordnet ist bzw. sich etwa auf Höhe einer Fügenaht seitlich öffnet, d.h. die Öffnungsberandung ist auf Höhe der Fügenaht unterbrochen. Dies erleichtert erheblich das Einschieben des Blockes bzw. der Strömungskanäle, da diese dann direkt an dem offenen Saugrohrgehäuse angeordnet sind.

Nach Einbringen des Blockes des Wärmetauschers in den der Brennkraftmaschine nächsten Teil des Saugrohrgehäuses wird dieser durch den zweiten Teil vorteilhaft verschlossen. In besonders vorteilhafter Weise ist der erste und der zweite Teil aneinandergefügt, insbesondere aneinandergeschweißt, beispielsweise reibgeschweißt oder mit einem anderen geeigneten Fügeverfahren angefügt.

Zur Abdichtung der Trennwand gegen Austausch von Ladefluid und Kühlfluid und/oder zur Abdichtung der Fügenaht zwischen dem ersten und zweiten Teil des Saugrohrgehäuses kann grundsätzlich jede Art einer geeigneten Dichtung vorgesehen sein. Als besonders vorteilhaft hat sich eine Klebdichtung erwiesen. Möglich ist auch eine Gummidichtung, wie z.B. eine O-Dichtung oder dergleichen, welche in eine Rohr-Trennwand-Verbindung oder in eine Verbindung zwischen dem ersten und zweiten Teil des Saugrohrgehäuses einlegbar ist.

Vorteilhaft ist, dass eine Öffnung zur Aufnahme eines Strömungskanals abgedichtet ist, insbesondere zur Seite einer Fügenaht, insbesondere mit einer Klebdichtung.

Vorteilhaft ist ein Aufladesystem für eine Brennkraftmaschine mit einem Auflademodul.

Vorteilhaft ist ein Brennkraftsystem mit einem Aufladesystem und einer Brennkraftmaschine, insbesondere einem Motor, wie einem Otto-Motor oder einem Dieselmotor od.dgl. und einem Abgassystem.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Im Einzelnen zeigt die Zeichnung in:
- Fig. 1: in schematischer Form eine Schnittdarstellung einer besonders bevorzugten Ausführungsform eines Auflademoduls entlang eines Schnittes in Richtung der Ladefluidströmung;
- Fig. 2: in schematischer Form eine Aufsicht auf ein Auflademodul gemäß einer zweiten bevorzugten Ausführungsform mit integriertem Wärmetauscher;
- Fig. 3: eine schematische dreidimensionale Ausschnittsdarstellung welche den Anordnungsbereich des Wärmetauschers im Saugrohr gemäß einer dritten Ausführungsform zeigt;
- Fig. 4: eine abgewandelte vierte Ausführungsform in der gleichen Darstellung wie Fig. 3;
- Fig. 5: eine schematische Darstellung eines Brennkraftsystems mit einem Aufladesystem für eine Brennkraftmaschine mit einem Auflademodul gemäß einer bevorzugten Ausführungsform der Erfindung.

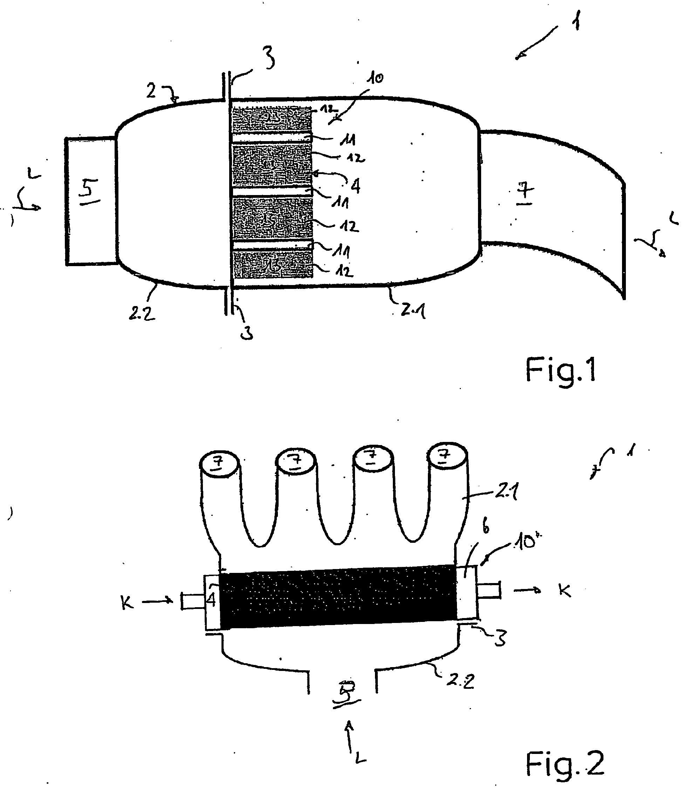

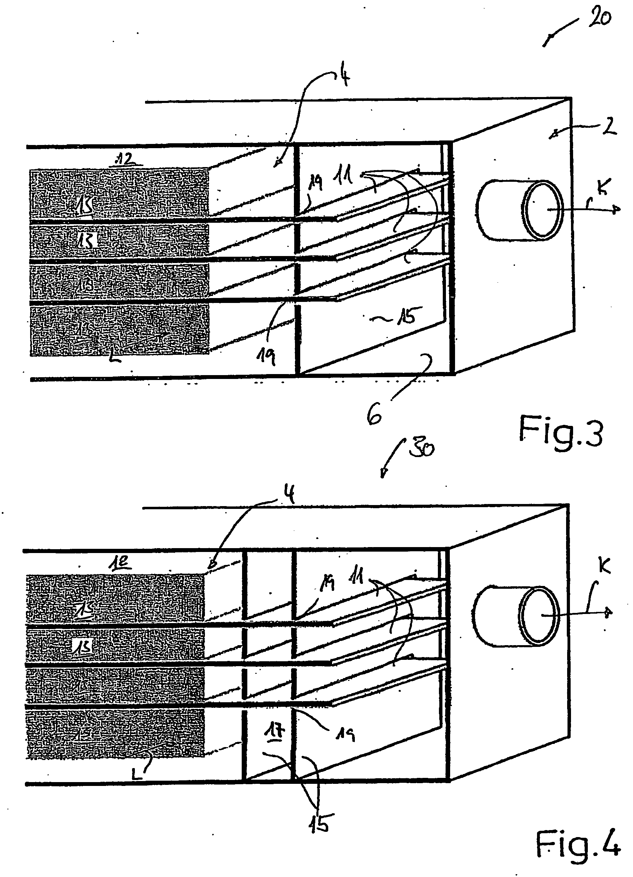

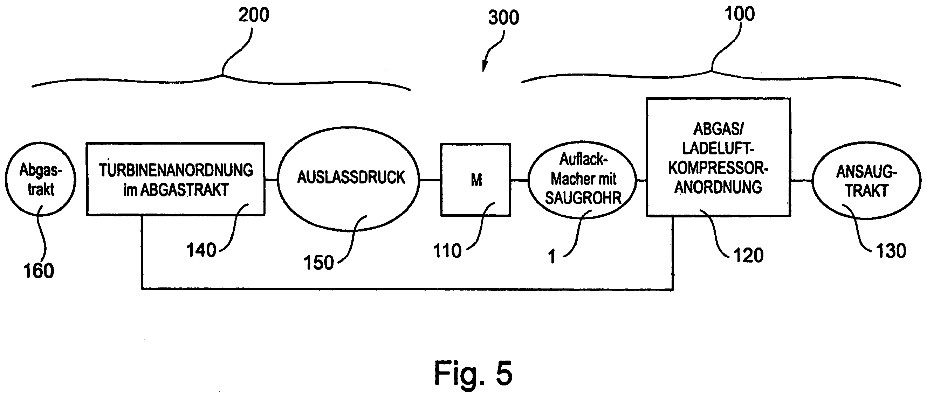

Fig. 1 zeigt eine erste Ausführungsform eines Auflademoduls 1. Dieses weist ein Saugrohr mit einem Saugrohrgehäuse 2 aus Kunststoff auf mit einem ersten der Brennkraftmaschine nächstliegenden Teil 2.1 und einem zweiten an den ersten Teil 2.1 angefügten Teil 2.2. Die Teile 2.1 und 2.2 sind an einer Fügenaht 3 miteinander reibverschweißt. In dem Saugrohrgehäuse 2 ist ein Wärmetauscher 10 in Form eines Ladeluftkühlers integriert, welcher vorliegend schematisch mit seinem Block 4 in Form eines Wärmetauschernetzes dargestellt ist. Der Block 4 weist vorliegend eine Anzahl von von dem Kühlfluid K durchströmbare Strömungskanäle 11 auf und eine die Strömungskanäle 11 aufnehmende von dem Ladefluid L durchströmbare Kammer 12. Die Kammer 12 enthält zwischen den Strömungskanälen 11 angeordnete - in Fig. 3 und Fig. 4 weiter schematisch beispielhaft dargestellte - Kühlrippen od.dgl. den Wärmetauschgrad erhöhende Elemente auf. Das Auflagemodul 1 wird über einen Stutzen 5 mit Ladeluft L versorgt, welche als Ladefluid über Schwingrohre 7 dem Zylinder der in Fig. 5 schematisch dargestellten Brennkraftmaschine 110 zugeführt wird.

Das Auflademodul 1 ist in Fig. 2 in einer Draufsicht gezeigt. Darin ist auch ersichtlich, dass der Wärmetauscher 10 neben dem im Saugrohr integrierten Block 4 eine Kühlfluidzuführung 6 aufweist, welche durch das Saugrohrgehäuse ausgebildet wird. Das Kühlfluid wird über die Kühlfluidzuführung 6 dem Block 4 des Wärmetauschers 10 zugeführt. In einer sich kreuzenden und voneinander getrennten wärmetauschenden Führung des Ladefluids L und des Kühlfluids K im Wärmetauscher 10 findet die Abkühlung des Ladefluids statt.

Wie aus dem in Fig. 3 dargestellten nicht erfindungsgemäßen Beispiel und der in Fig. 4 dargestellten abgewandelten Ausführungsform eines Wärmetauschers 20, 30 ersichtlich ist, ist die Kühlfluidzuführung 6 in besonders einfacher Weise mittels einer Trennwand 15 gebildet. Gemäß der Ausführungsform des Wärmetauschers 30 in Fig. 4 ist die Trennwand 15 doppelwandig mit einem Zwischenraum 17 ausgeführt. Es können auch (nicht gezeigt) mehrere Trennwände 15 vorgesehen sein, zwischen denen ein Zwischenraum besteht. Ein Zwischenraum kann je nach Zweckmäßigkeit frei bleiben oder auch ausgegossen werden z.B. mit Dichtungsmaterial od.dgl. Die Ausführungsform des Wärmetauschers 30 in Fig. 4 hat damit den Vorteil, dass keine weitere Dichtungsmaßnahme vorgenommen werden muss, um das Kühfluid K dichtend vom Ladefluid L getrennt zu führen.

Die im Saugrohrgehäuse innenliegende Trennwand 15 ist außerdem im Anordnungsbereich des Blocks 4 des Wärmetauschers 10 angeordnet, so dass durch Einsetzen des Blocks 4 in die vom Gehäuse 2 ausgebildete Trennwand der Wärmetauscher 10, 20, 30 gebildet wird. Die Trennwand ist zwischen einem Kühlfluid-Einlass oder -Auslass der Kühlfluidzuführung 6 des Saugrohrgehäuses und der Ladefluidführung des Saugrohrgehäuses 2 angeordnet.

Die vorliegend beschriebenen Ausführungsformen dienen zur Erläuterung des Konzepts der Erfindung und sind nicht einschränkend gemeint. So ist eine Dichtung, insbesondere der Verbindung zwischen Trennwand 15 und Strömungskanal 11, auf vielfältige Weise realisierbar, beispielsweise auch durch eine Klebedichtung, eine Gummidichtung oder eine O-Ringdichtung. Insbesondere kann bei einer in Fig. 4 dargestellten doppelwandigen Trennwand 15 gegebenenfalls eine weitere Dichtungsmaßnahme entfallen. Der Zwischenraum 17 in der doppelwandigen Trennwand oder zwischen Trennwänden 15 kann ausgefüllt werden z.B. mit Kunststoffmaterial - dies spart einen Arbeitsschritt ein, da eine weitere Dichtungsmaßnahme nicht notwendig ist. Sollte der Zwischenraum 17 offen bleiben, kann gleichwohl bei entsprechender Abdichtung der Zwischenraum 17 zum Motorraum hin offen bleiben. Dies verhindert, dass bei etwaigen Kühlmittelleckagen Kühlmittel in den Verbrennungsraum gerät.

Vorliegend sind die Strömungskanäle als Flachrohre ausgebildet und die Trennwand 15 als ein auf die Flachrohre ausgelegter Rohrboden. Die Trennwand 15 weist dazu zur Öffnung des ersten Teils 2.1 des Wärmetauschergehäuses 2 hin offene Schlitzöffnungen 19 auf, d.h. Schlitzöffnungen, deren Berandung an der Öffnung des ersten Teils 2.1 unterbrochen ist. In die Schlitzöffnungen ist ein Strömungskanal 11 in Form eines Flachrohres einschiebbar. Somit kann unter Einschieben der Flachrohre 11 in die Schlitzöffnungen bei geöffnetem Teil 2.1 der Block 4 besonders einfach in das Gehäuse 2 eingeschoben und im ersten Teil 2.1 des Gehäuses 2 gehalten werden. Anschließend können - insbesondere bei dem nicht erfindungsgemäßen Beispiel des Wärmetauschers 20 in Fig. 3 - die Verbindungen zwischen Strömungskanal 11 und Trennwand 15 abgedichtet, insbesondere dicht abgeklebt werden. Zur Fertigstellung kann weiter anschließend das zweite Teil 2.2 des Saugrohrgehäuses 2 auf das erste Teil 2.1 des Saugrohrgehäuses 2 angefügt, vorliegend reibgeschweißt werden. Dabei dient der angeschweißte zweite Teil 2.2 des Gehäuseteils 2 gleichzeitig als Deckel für die Fluidzuführung 6. Durch die so bewerkstelligte Integration des Wärmetauschers 10, 20, 30 im Saugrohrgehäuse 2 wird zum einen eine dichte räumliche Trennung von Ladefluid L und Kühlfluid K erreicht und zum anderen - unter synergetischer Materialnutzung des Saugrohrgehäuses 2 und leichtem Einsetzen des Blocks 4 des Wärmetauschers - eine besonders vorteilhafte Integration des Wärmetauschers 10, 20, 30 im Saugrohrgehäuse erreicht.

Gleiche oder ähnliche Merkmale bzw. Merkmale mit gleicher oder ähnlicher Funktion sind vorliegend der Einfachheit halber mit gleichen Bezugszeichen versehen.

Fig. 5 zeigt in schematischer Form ein Brennkraftsystem 300 mit einer Brennkraftmaschine 110, einem Abgassystem 200 und mit einem Aufladesystem 100 für die Brennkraftmaschine 110. Der Brennkraftmaschine 110 vorgeschaltet ist eine Abgas/Ladeluft-Kompressoranordnung 120 mit einem vorgeschalteten Ansaugtrakt 130. Zwischen dem Motor 110 und der Abgas/Ladeluft-Kompressor-Anordnung 120 ist ein Auflademodul 10, 20, wie es im Folgenden erläutert wird, angeordnet. Dem Motor 110 nachgeschaltet ist eine Turbinenanordnung 140, welche mit dem Motor 110 über ein Auslassmodul 150 verbunden ist und zum Antrieb eines Kompressors der Anordnung 120 genutzt werden kann. Der Turbinenanordnung 140 nachgeschaltet ist der Abgastrakt 160.

Die Erfindung betrifft eine Auflademodul 1 für ein Aufladesystem 100 einer Brennkraftmaschine 110, aufweisend ein Saugrohr für ein Ladefluid, insbesondere ein Gas wie Abgas und/oder Ladeluft od. dgl. Gasgemische, und einen im Saugrohr integrierten Wärmetauscher 10, 20, 30, 40, zum Wärmetausch zwischen dem Ladefluid und einem Kühlfluid, wobei der Wärmetauscher einen Block 4 zur voneinander getrennten und wärmetauschenden Führung des Ladefluids und des Kühlfluids aufweist und eine Kühlfluid-Zuführung 6. Erfindungsgemäß ist vorgesehen, dass das Saugrohr ein Saugrohrgehäuse 2 aufweist, in welchem der Block 4 des Wärmetauschers gehalten ist und welches wenigstens die Kühlfluid-Zuführung 6 ausbildet.

### Bezugszeichenliste

- 1: Auflademodul
- 2: Saugrohrgehäuse
- 2.1: erstesTeil
- 2.2: zweitesTeil
- 3: Fügenaht
- 4: Block
- 5: Stutzen
- 6: Kühlfluidzuführung, Fluidzuführung
- 7: Schwingrohr
- 10: Wärmetauscher, Auflademodul
- 11: Strömungskanal
- 12: Kammer
- 15: Trennwand
- 17: Zwischenraum
- 19: Schlitzöffnungen
- 20: Wärmetauscher, Auflademodul
- 30: Wärmetauscher
- 100: Aufladesystem
- 110: Brennkraftmaschine, Motor
- 120: Abgas/Ladeluft-Kompressoranordnung, Anordnung
- 130: Ansaugtrakt
- 140: Turbinenanordnung
- 150: Auslassmodul
- 200: Abgassystem
- 300: Brennkraftsystem
- L: Ladefluid
- K: Kühlfluid

## Patentansprüche

1. Auflademodul (1) für ein Aufladesystem (100) einer Brennkraftmaschine (110) zur Zuführung eines Ladefluids in komprimierter Form zur Brennkraftmaschine, wobei das Ladefluid über Schwingrohre dem Zylinder der Brennkraftmaschine zugeführt wird, aufweisend ein Saugrohr für ein Ladefluid, insbesondere ein Gas wie Abgas und/oder Ladeluft od. dgl. Gasgemische, und einen im Saugrohr integrierten Wärmetauscher (10, 20, 30), zum Wärmetausch zwischen dem Ladefluid und einem Kühlfluid, wobei der Wärmetauscher (10, 20, 30) einen Block (4) zur voneinander getrennten und wärmetauschenden Führung des Ladefluids und des Kühlfluids aufweist und eine Kühlfluid-Zuführung (6), wobei das Saugrohr ein Saugrohrgehäuse (2) aufweist, in welchem der Block (4) des Wärmetauschers (10, 20, 30) gehalten ist, **dadurch gekennzeichnet, dass** das Saugrohrgehäuse auch die Kühlfluid-Zuführung (6) ausbildet, wobei das Saugrohrgehäuse (2) ein Wärmetauschergehäuse ausbildet, in welchem der Block (4) des Wärmetauschers (10, 20, 30) gehalten ist, wobei der Block (4) in Form eines Wärmetauscher-Netzes gebildet ist, insbesondere der Block (4) aufweist:
eine Anzahl von dem Kühlfluid durchströmbare Strömungskanäle (11); und eine die Strömungskanäle (11) aufnehmende, von dem Ladefluid durchströmbare Kammer (12),
wobei die Kühlfluid-Zuführung (6) ausgebildet ist durch wenigstens eine, insbesondere im Anordnungsbereich des Blockes (4), im Saugrohrgehäuse (2) innenliegende Trennwand (15) und wobei die wenigstens eine Trennwand (15) doppelwandig ausgebildet ist.

2. Auflademodul (1) nach Anspruch 1, **dadurch gekennzeichnet, dass** eine Trennwand (15) zwischen einem Kühlfluid-Einlass der Kühlfluid-Zuführung (6) des Saugrohrgehäuses (2) und der Ladefluidführung des Saugrohrgehäuses (2) angeordnet ist.

3. Auflademodul (1) nach einem der Ansprüche 1 oder 2, **dadurch gekennzeichnet, dass** eine Trennwand (15) Strömungskanäle (11) des Blockes (4) hält, insbesondere die Strömungskanäle (11) als Rohre, insbesondere Flachrohre, und die Trennwand (15) als Rohrboden ausgebildet ist.

4. Auflademodul (1) nach einem der Ansprüche 1 bis 3, **dadurch gekennzeichnet, dass** eine Trennwand (15) eine Öffnung zur Aufnahme eines Strömungskanals (11) aufweist, insbesondere eine Schlitzöffnung (19), insbesondere eine einseitig offene Schlitzöffnung (19) aufweist.

5. Auflademodul (1) nach einem der Ansprüche 1 bis 4, **dadurch gekennzeichnet, dass** eine Öffnung zur Aufnahme eines Strömungskanals derart ist, dass ein Strömungskanal einschiebbar ist, insbesondere seitlich einschiebbar ist.

6. Auflademodul (1) nach einem der Ansprüche 1 bis 5, **dadurch gekennzeichnet, dass** das Saugrohrgehäuse (2) einen ersten Teil (2.1) und einen zweiten Teil (2.2) aufweist.

7. Auflademodul (1) nach einem der Ansprüche 1 bis 6, **dadurch gekennzeichnet, dass** der Block (4) des Wärmetauschers (10, 20, 30) nur an einem Teil, insbesondere dem ersten Teil (2.1), des Saugrohrgehäuses (2) gehalten ist, insbesondere an dem der Brennkraftmaschine (110) nächsten Teil (2.1, 2.2) gehalten ist.

8. Auflademodul (1) nach einem der Ansprüche 1 bis 7, **dadurch gekennzeichnet, dass** wenigstens einer der Teile (2.1, 2.2) des Saugrohrgehäuses (2) aus Kunststoff ist.

9. Auflademodul (1) nach einem der Ansprüche 1 bis 8, **dadurch gekennzeichnet, dass** der erste und der zweite Teil (2.1, 2.2) aneinandergefügt, insbesondere aneinandergeschweißt, insbesondere reibgeschweißt, sind.

10. Auflademodul (1) nach einem der Ansprüche 1 bis 9, **dadurch gekennzeichnet, dass** eine Fügenaht (3) zwischen dem ersten und dem zweiten Teil (2.1, 2.2) derart verläuft, dass der Wärmetauscher (10, 20, 30) in einen der Teile (2.1, 2.2) einsetzbar ist.

11. Auflademodul (1) nach einem der Ansprüche 1 bis 10, **dadurch gekennzeichnet, dass** eine Öffnung zur Aufnahme eines Strömungskanals, insbesondere eine einseitig offene Schlitzöffnung (19), sich etwa auf Höhe einer Fügenaht (3) öffnet.

## Claims

1. A charging module (1) for a charging system (100) of an internal combustion engine (110) for supplying the internal combustion engine with a charge fluid in compressed form, wherein the charge fluid is supplied to the cylinder of the internal combustion engine via vibration tubes, having a suction tube for a charge fluid, in particular a gas such as exhaust gas and/or charge air or similar gas mixtures, and a heat exchanger (10, 20, 30) which is integrated in the suction tube for exchanging heat between the charge fluid and a cooling fluid, wherein the heat exchanger (10, 20, 30) has a block (4) for guiding the charge fluid and the cooling fluid in a separated and heat-exchanging manner and a cooling fluid supply (6), wherein the suction tube has a suction tube housing (2) in which the block (4) of the heat exchanger (10, 20, 30) is held, **characterised in that** the suction tube housing also forms the cooling fluid supply (6), wherein the suction tube housing (2) forms a heat exchanger housing in which the block (4) of the heat exchanger (10, 20, 30) is held, wherein the block (4) is formed in the form of a heat exchanger network, wherein the block (4), in particular, has the following:
a number of flow channels (11) through which the cooling fluid can flow;
and a chamber (12) which receives the flow channels (11) and through which the charge fluid can flow, wherein the cooling fluid supply (6) is formed by at least one separation wall (15), in particular in the arrangement area of the block (4), in the interior of the suction tube housing (2), and wherein the at least one separating wall (15) is formed in a double-walled manner.

2. The charging module (1) as claimed in claim 1, **characterised in that** a separation wall (15) is arranged between a cooling fluid inlet of the cooling fluid supply (6) of the suction tube housing (2) and the charge air supply of the suction tube housing (2).

3. The charging module (1) as claimed in one of claims 1 or 2, **characterised in that** a separation wall (15) holds flow channels (11) of the block (4), in particular the flow channels (11) are formed as tubes, in particular flat tubes, and the separation wall (15) is formed as tube bottom.

4. The charging module (1) as claimed in one of claims 1 to 3, **characterised in that** a separation wall (15) has an opening for receiving a flow channel (11), in particular a slot opening (19), in particular a unilaterally open slot opening (19).

5. The charging module (1) as claimed in one of claims 1 to 4, **characterised in that** an opening for receiving a flow channel is such that a flow channel can be inserted, in particular laterally inserted.

6. The charging module (1) as claimed in one of claims 1 to 5, **characterised in that** the suction tube housing (2) has a first part (2.1) and a second part (2.2).

7. The charging module (1) as claimed in one of claims 1 to 6, **characterised in that** the block (4) of the heat exchanger (10, 20, 30) is held on only one part, in particular the first part (2.1) of the suction tube housing (2), is in particular held on the part (2.1, 2.2) next to the internal combustion engine (110).

8. The charging module (1) as claimed in one of claims 1 to 7, **characterised in that** at least one of the parts (2.1, 2.2) of the suction tube housing (2) is made of plastic.

9. The charging module (1) as claimed in one of claims 1 to 8, **characterised in that** the first and the second part (2.1, 2.2) are joined together, in particular welded together, in particular friction-welded.

10. The charging module (1) as claimed in one of claims 1 to 9, **characterised in that** a joining seam (3) between the first and the second part (2.1, 2.2) runs in such a way that the heat exchanger (10, 20, 30) can be inserted into one of the parts (2.1, 2.2).

11. The charging module (1) as claimed in one of claims 1 to 10, **characterised in that** an opening for receiving a flow channel, in particular a unilaterally open slot opening (19), opens approximately at the level of a joining seam (3).

## Revendications

1. Module de suralimentation (1) pour un système de suralimentation (100) d'un moteur à combustion interne (110), ledit module de suralimentation servant à fournir au moteur à combustion interne, sous forme comprimée, un fluide de suralimentation, où le fluide de suralimentation est fourni au cylindre du moteur à combustion interne, par des pipes d'admission, ledit module de suralimentation présentant un collecteur d'admission pour un fluide de suralimentation, en particulier des gaz tels que des gaz d'échappement et / ou de l'air de suralimentation ou bien des mélanges gazeux similaires, et présentant un échangeur de chaleur (10, 20, 30) intégré dans le collecteur d'admission, ledit échangeur de chaleur servant à l'échange de chaleur entre le fluide de suralimentation et un fluide de refroidissement, où l'échangeur de chaleur (10, 20, 30) présente un bloc (4) servant au guidage du fluide de suralimentation et du fluide de refroidissement, lesdits fluides de suralimentation et de refroidissement étant séparés l'un de l'autre et échangeant de la chaleur, et présente une alimentation (6) en fluide de refroidissement, où le collecteur d'admission présente un carter de collecteur d'admission (2) dans lequel est maintenu le bloc (4) de l'échangeur de chaleur (10, 20, 30), **caractérisé en ce que** le carter du collecteur d'admission forme également l'alimentation (6) en fluide de refroidissement, où le carter (2) du collecteur d'admission forme un carter d'échangeur de chaleur dans lequel est maintenu le bloc (4) de l'échangeur de chaleur (10, 20, 30), où le bloc (4) est conçu sous la forme d'un réseau d'échangeur de chaleur, le bloc (4) présentant en particulier :
un certain nombre de conduits d'écoulement (11) traversés par le fluide de refroidissement ;
et une chambre (12) recevant les conduits d'écoulement (11) et traversée par le fluide de suralimentation,
où l'alimentation (6) en fluide de refroidissement est formée par au moins une paroi de séparation (15) se trouvant en particulier à l'intérieur de la zone d'agencement du bloc (4), dans le carter (2) du collecteur d'admission, et où la paroi de séparation (15) au moins au nombre de un est formée en étant à double paroi.

2. Module de suralimentation (1) selon la revendication 1, **caractérisé en ce qu'**une paroi de séparation (15) est disposée entre l'entrée du fluide de refroidissement de l'alimentation (6) en fluide de refroidissement du carter (2) du collecteur d'admission, et le guidage du fluide de suralimentation du carter (2) du collecteur d'admission.

3. Module de suralimentation (1) selon l'une des revendications 1 ou 2, **caractérisé en ce qu'**une paroi de séparation (15) maintient des conduits d'écoulement (11) du bloc (4), en particulier les conduits d'écoulement (11) conçus comme des tubes, en particulier des tubes plats, et la paroi de séparation (15) est conçue comme une plaque tubulaire.

4. Module de suralimentation (1) selon l'une quelconque des revendications 1 à 3, **caractérisé en ce qu'**une paroi de séparation (15) présente une ouverture servant à recevoir un conduit d'écoulement (11), présente en particulier une ouverture en forme de fente (19), en particulier une ouverture en forme de fente (19) ouverte sur un côté.

5. Module de suralimentation (1) selon l'une quelconque des revendications 1 à 4, **caractérisé en ce qu'**une ouverture servant à recevoir un conduit d'écoulement est conçue de manière telle, qu'un conduit d'écoulement puisse être introduit, qu'il puisse être introduit en particulier latéralement.

6. Module de suralimentation (1) selon l'une quelconque des revendications 1 à 5, **caractérisé en ce que** le carter (2) du collecteur d'admission présente une première partie (2.1) et une seconde partie (2.2).

7. Module de suralimentation (1) selon l'une quelconque des revendications 1 à 6, **caractérisé en ce que** le bloc (4) de l'échangeur de chaleur (10, 20, 30) est maintenu seulement sur une partie, en particulier sur la première partie (2.1) du carter (2) du collecteur d'admission, **en ce que** ledit bloc est maintenu en particulier sur la partie (2.1, 2.2) la plus proche du moteur à combustion interne (110).

8. Module de suralimentation (1) selon l'une quelconque des revendications 1 à 7, **caractérisé en ce qu'**au moins l'une des parties (2.1, 2.2) du carter (2) du collecteur d'admission est en matière plastique.

9. Module de suralimentation (1) selon l'une quelconque des revendications 1 à 8, **caractérisé en ce que** la première et la seconde parties (2.1, 2.2) sont jointes l'une contre l'autre, en particulier soudées l'une contre l'autre, en particulier soudées par friction.

10. Module de suralimentation (1) selon l'une quelconque des revendications 1 à 9, **caractérisé en ce qu'**un joint d'assemblage (3) s'étend entre la première et la seconde parties (2.1, 2.2), de manière telle que l'échangeur de chaleur (10, 20, 30) puisse être introduit dans l'une des parties (2.1, 2.2).

11. Module de suralimentation (1) selon l'une quelconque des revendications 1 à 10, **caractérisé en ce qu'**une ouverture servant à recevoir un conduit d'écoulement, en particulier une ouverture en forme de fente (19) ouverte sur un côté, s'ouvre à peu près à hauteur d'un joint d'assemblage (3).
